(19) Europäisches Patentamt
European Patent Office
Office européen des brevets

(11) Publication number: **0 289 031**
**A2**

(12) # EUROPEAN PATENT APPLICATION

(21) Application number: 88106855.5

(51) Int. Cl.4: G11B 13/04

(22) Date of filing: 28.04.88

(30) Priority: 01.05.87 JP 108220/87
01.05.87 JP 108221/87
26.05.87 JP 128900/87

(43) Date of publication of application:
02.11.88 Bulletin 88/44

(84) Designated Contracting States:
DE FR GB NL

(71) Applicant: Shin-Etsu Chemical Co., Ltd.
6-1, Ohtemachi 2-chome
Chiyoda-ku Tokyo 100(JP)

(72) Inventor: Shimizu, Yoshiaki
28-20, Maruokacho
Takefu-shi Fukui-ken(JP)
Inventor: Nakamura, Eiji
2-8, Kitago 3-chome
Takefu-shi Fukui-ken(JP)
Inventor: Ohashi, Ken
2-6, Kitago 3-chome
Takefu-shi Fukui-ken(JP)
Inventor: Tawara, Yoshio
1603, Nakano 1-chome
Fukui-shi Fukui-ken(JP)

(74) Representative: Jaeger, Klaus, Dr. et al
Jaeger, Steffens & Köster Patentanwälte
Pippinplatz 4a
D-8035 München-Gauting(DE)

(54) **Magneto-optical recording medium.**

(57) A magneto-optical recording medium of amorphous alloy coated over a film substrate is provided, which has its axis of easy magnetization in the direction of film thickness. The composition of the amorphous magnetizable film is

$$R_x \quad M_y \quad T_z$$

$$A_n$$

in which R is one or more rare earth elements including at least one element of atomic number 62 to 71 inclusive: M is one or more elements, selected from titanium, zirconium, and hafnium; T is iron or a combination of iron and cobalt; and A is aluminum, boron, bismuth and/or antimony; and x, y, z, and n are mole percentages falling respectively in the following ranges: $4 \leq x \leq 15$; $4 < y \leq 15$; $70 \leq z \leq 92$; and $0 \leq n \leq 10$.

EP 0 289 031 A2

# MAGNETO-OPTICAL RECORDING MEDIUM

## BACKGROUND OF THE INVENTION

The present invention relates to a magneto-optical recording medium having improved magneto-optical recording characteristic used in magneto-optical memories, magnetic recording display components, etc., and more particularly to an amorphous magneto-optical recording medium of the kind formed in a film which has its axis of easy magnetization in the direction of film thickness, and has a high coercive force and a large Kerr rotation angle together with good chemical stability and the nature of giving a large S/N ratio.

Conventionally, the most usual magneto-optical recording media in the form of a thin film coated over a substrate are (i) a polycrystal film of MnBi and the like, (ii) a monocrystal film of GIG and the like, and (iii) an amorphous film made of an alloy containing as the main components rare earth metal(s) and transition metal(s) such as GdTbFe and TbFeCo.

Of these media, the polycrystal films are characterized by having relatively large Kerr rotation angles, but unfortunately they give extremely small S/N ratios owing to their having considerable grain boundaries which give rise to scattering of light. The monocrystal films are known to have excellent magnetic characteristics, but the problem with them is the difficulty of making it into a wide film to cover a wide disk.

In contrast to these media, the amorphous alloys categorized in (iii) such as GdTbFe and TbFeCo are characteristic of generating relatively small medium noise and are relatively easy and, therefore, economical to form into a wide film; hence these amorphous alloys are rated as the more advantageous materials for the magneto-optical recording film media, and a lot of attention has been paid to the research and development of them. However, since the Kerr rotation angles of those amorphous alloys are small, the S/N ratios they give are not high enough and, what is more, they generally want chemical stability, especially resistance to oxidation, so badly that the films made of them are liable to corrode as time goes by accompanied by degradation of magnetic properties. In particular, Japanese Patent Kokai No. 60-193125 (1985) uses neodymium, which is a light lanthanoid, as the rare earth constituent of the magnetizable film medium. However, although certain improvement was made in Kerr rotation angle over the conventional magnetizable films, the coercive force is not extraordinarily good, and also it seems that establishment of the axis of easy magnetization in the direction normal to the film is yet difficult; these inconveniences are supposedly attributable to the lightness of neodymium. Japanese Patent Kokai Nos. 61-87306 (1986) and 62-232739 (1987) use rare earth element(s) as much as 18 - 35 mole percentages, and probably due to the relatively rich content of the rare earth(s), it appears chemical inertness, especially oxidation resistivity remains to be improved. Hence, none of the known materials for magneto-optical recording medium is without a shortcoming in one aspect or another, and therefore discovery of a material which gives a chemically inert film having both high coercive force and large Kerr rotation angle is strongly desired, especially from the fields where high density information recording is essential.

## SUMMARY OF THE INVENTION

It is therefore an object of the invention to provide a magneto-optical recording medium of an amorphous alloy improved in chemical stability and having greater Kerr rotation angle.

The foregoing and other objects, features and advantages of the present invention will be apparent from the following detailed description thereof.

The inventors were able to attain the object as a result of their ardent studies which generally centered on preparation of numerous films of various compositions and testing them, and eventually they came up with a group of amorphous magneto-optical films which are effectively free of all the flaws mentioned above and are significantly improved in the magneto-optical recording characteristics, and thus desirable for practical use in the applications where high density information recording is a must.

According to the invention, there is provided a magneto-optical recording medium of amorphous alloy coated over a film substrate, and said medium having its axis of easy magnetization in the direction of film thickness, wherein the composition of the medium is represented by the formula,

$$R_x\ M_y\ T_z\ A_n$$

in which R designates one or more rare earth elements including at least one having atomic number 62 to 71 inclusive: M designates one or more elements selected from titanium, zirconium, and hafnium; T designates iron or a combination of iron and cobalt; and A designates at least one element selected from aluminum, boron, bismuth and antimony; and x, y, z, and n represent mole percentages that respectively fall in the following ranges: $4 \leq x \leq 15$; $4 < y \leq 15$; $70 \leq z \leq 92$; and $0 \leq n \leq 10$. Also, $x + y + z + n = 100$. If T consists of both iron and cobalt, it is preferable that the latter accounts for not greater than 30 wt% of T. Also, x is preferably between 6 and 15 mole percentages; and y is preferably between 6 and 12 mole percentages. Although R may include any rare earth elements such as Y, Ce, Pr, Nd, Pm, Sm, Eu, Gd, Tb, Dy, Ho, Tm, Yb, Lu, it is essential that R comprises at least one heavy rare metal having atomic weight not smaller than that of samarium, e.g. Sm, Tb, Ho. It is found that the above ranges for the variables x, y, z, and n are essential and that any transgression from the ranges results in failure in attaining the object of the invention.

Preferably, for the express purpose of obtaining increased Kerr rotation angle, aluminum, boron, bismuth and/or antimony should be included, in the composition, bismuth and antimony being more effective, and that the content of A in the range of 1 - 8 mole percentages is more promising.

Furthermore, it was found that the thickness of the magnetizable medium should be between 1,500Å and 3,000 Å for facilitation of establishing the axis of easy magnetization normal to the film.

In fact, the invented amorphous magneto-optical recording medium has been tested and the results include that the Kerr rotation angle is as large as 0.5° , the chemical stability is so good that the media prepared in accordance with the invention was left outdoors to stand for one month with a result of no degradation in magnetic properties, and also it has been confirmed that the coercive force and the saturation magnetization are both excellent and thus it has become possible to provide an amorphous magneto-optical recording film medium with axis of easy magnetization normal thereto capable of high density recording of information.

## DESCRIPTION OF THE PREFERRED EXAMPLES

Preferred examples of the amorphous magneto-optical recording medium of the present invention will be described in detail.

Incidentally, the magneto-optical recording medium of amorphous alloys of the invention represented generally by

$$R_x\ M_y\ T_z\ A_n$$

(where n may be zero in which case A is absent) is prepared by means of RF sputtering method, and the film thickness is controlled to be between 1,500Å and 3,000Å for the reasons of easiness in obtaining stably magnetizable film as well as rendering the film easy to magnetize exclusively in the direction normal to the film.

The said RF sputtering method consists of first melting together the elements each in a predetermined amount in an inert atmosphere to form an alloy and then depositing a thin film of the alloy on the surface of a substrate. In particular, the present inventors prepared to test pieces under the following conditions: a chamber was decompressed to $1 \times 10^{-7}$ Torr; Ar gas was introduced in the chamber until the pressure therein becomes between $1.5 \times 10^{-2}$ Torr and $3.0 \times 10^{-2}$ Torr; then the alloy was evaporated in a chamber; the alloy vapor was deposited over a glass piece at a rate of 150 Å/min.

The coercive force Hc was measured by means of a vibrating sample magnetometer (VSM), and the Kerr rotation angle $\theta_K$ was measured on the side of the glass substrate by means of a He-Ne laser.

Example 1:

Example 1 is characterized in that R consists entirely of Sm, Ti is selected as M, and n is zero. Tests were conducted to measure the Curie temperatures Tc (°C) of various cases of Example 1 wherein the ratio x : y : z was fixed at 1 : 1 : 10 (in mole ratio) and the content of Co in T is varied from zero to 40 wt% as shown in Table 1, so that the general formula

$$R_x \; M_y \; T_z \; A_n$$

cans be rewritten as

$$Sm_p \; Ti_p \; T_{10p}$$

for this example, where p = 25/3. It is seen in Table 1 that the Curie temperature Tc in the case where Co content in T is 40 wt% is 234 °C; however, the output of a usual laser for writing cannot heat recording media to temperatures exceeding 200 °C or so, so that 30 wt% is about the maximum allowable content for Co in T. On the other hand, if the Curie temperature Tc of a composition is too low, it becomes necessary to weaken the laser output, and the problem here is the fact that the weaker the laser output the lower will the S/N ratio be. It is therefore considered extremely important that the Curie temperature is controlled to the optimum value corresponding to each system. From the results of the tests on Example 1, one can find that for a composition of R-Ti-Fe series it is an effective means to replace 30 wt% or somewhat less of Fe with Co when it is specially desired to render the Curie temperature of the composition optimum.

TABLE 1

| Co content (wt%) | 0 | 5 | 10 | 20 | 30 | 40 |
|---|---|---|---|---|---|---|
| Tc ( ℃ ) | 96 | 112 | 128 | 165 | 198 | 234 |

Example 2:

Example 2, like Example 1, is characterized in that R consists entirely of Sm, M is Ti exclusively, and n is zero. Tests were conducted to measure the saturation magnetization Ms (emu/cc) in various cases of Example 2 wherein T consisted of Fe and Co in a fixed proportion of 8 : 2, the ratio x : z was fixed at 1 : 10 (in mole ratio) and the content of Ti is varied from zero to 15 mole percentages as shown in Table 2, so that the general formula can be written as

$$Sm_p \; Ti_{(100-11p)} \; T_{10p} \; .$$

TABLE 2

| Ti content (mole %) | 0 | 3 | 6 | 8 | 12 | 15 |
|---|---|---|---|---|---|---|
| Ms (emu/cc) | 932 | 925 | 915 | 908 | 895 | 863 |

The results listed in Table 2 indicate that the rate of decrease in the saturation magnetization Ms with respect to the Ti content increases sharply when the proportion of Ti content is larger than 12 mole percentages. It is known also that the durability becomes poor if the Ti content is smaller than 6 mole percentages, and, therefore, the preferred content of Ti is 6 to 12 mole percentages.

Table 3 shows the results of tests in which the same test pieces were left alone for 30 days during which the ambient temperature was kept at 20°C and the humidity controlled at 60%, and at the end of the period the coercive force Hc and the Kerr rotation angle $\theta_K$ were measured. In Table 3, the values entered in the rows of Hc and $\theta_K$ are the values of Hc and $\theta_K$ measured at the end of the period divided by the respective values measured at the start of the period.

TABLE 3

| Ti content (mole %) | 0 | 3 | 6 | 8 | 12 | 15 |
|---|---|---|---|---|---|---|
| Hc (ratio) | 0 | 0.36 | 0.58 | 0.94 | 0.96 | 0.96 |
| $\theta_K$ (ratio) | 0 | 0.18 | 0.49 | 0.88 | 0.90 | 0.92 |

Example 3:

Example 3 is characterized in that R consists entirely of Sm, M is Ti exclusively, T is Fe exclusively, and n is zero. Tests were conducted in the same procedure as in Example 3 to measure the coercive force Hc and the Kerr rotation angle $\theta_K$ in various cases of Example 3 wherein the ratio x : z was fixed at 1 : 10 (in mole ratio and the content of Ti is varied from zero to 15 mole percentages, and the results are shown in Table 4. The general formula

$$R_x\ M_y\ Tz\ A_n$$

can be rewritten for this particular example as

$$Sm_p\ Ti_{(100-11p)}\ Fe_{10p}\ .$$

TABLE 4

| Ti content (mole %) | 0 | 3 | 6 | 8 | 12 | 15 |
|---|---|---|---|---|---|---|
| Hc (ratio) | 0 | 0.35 | 0.55 | 0.95 | 0.96 | 0.96 |
| $\theta_K$ (ratio) | 0 | 0.17 | 0.45 | 0.88 | 0.90 | 0.91 |

Example 4:

Example 4 is characterized in that R consists entirely of Sm, T consists of Fe and Co in a fixed proportion of 8 : 2, Bi is selected as A, and the proportion between Sm, T, and Bi is fixed at 1 : 10 : 1 so that Example 4 can be represented generally by

$$Sm_p\ M_{(100-12p)}\ T_{10p}\ Bi_p\ .$$

Three groups of test pieces were prepared: the pieces belonging to the first group contained Ti as M, the second contained Hf as M, and the third contained Zr as M. Each group consisted of seven pieces differing only in the content of the respective constituent M, i.e. Ti, Zr, or Hf, ranging from 0 to 15 mole percentages. Table 5 shows the results of tests in which the test pieces were left alone for 30 days during which the ambient temperature was kept at 20 °C and the humidity controlled at 60 °C, and at the end of the period the

TABLE 5

| M content (mol%) | | 0 | 3 | 6 | 8 | 12 | 15 |
|---|---|---|---|---|---|---|---|
| Ti | Hc | 0 | 0.32 | 0.51 | 0.90 | 0.92 | 0.91 |
| | $\theta_K$ | 0 | 0.17 | 0.43 | 0.89 | 0.91 | 0.90 |
| Zr | Hc | 0 | 0.30 | 0.45 | 0.87 | 0.88 | 0.86 |
| | $\theta_K$ | 0 | 0.15 | 0.40 | 0.88 | 0.90 | 0.89 |
| Hf | Hc | 0 | 0.28 | 0.44 | 0.85 | 0.87 | 0.88 |
| | $\theta_K$ | 0 | 0.12 | 0.39 | 0.84 | 0.86 | 0.85 |

(Values in the rows of Hc and $\theta_K$ are all ratios.)

coercive force Hc and the Kerr rotation angle $\theta_K$ were measured. In Table 5, the values entered in the rows

of Hc and $\theta_K$ were obtained in the same way as those in Table 3.

Table 6 shows the results of another tests in which the saturation magnetization Ms (emu/cc) of every test piece was measured.

Like the results obtained with Example 2, the results listed in Table 6 indicate that the rate of decrease in the saturation magnetization Ms with respect to the M content increases sharply when the proportion of M content is larger than 12 mole percentages. Also, the durability becomes poor if the Ti content is smaller than 6 mole percentages, and, therefore, the preferred content of Ti is 6 to 12 mole percentages.

TABLE 6 (Ms in emu/sec)

| M content (mol%) | 0 | 3 | 6 | 8 | 12 | 15 |
|---|---|---|---|---|---|---|
| Ti | 929 | 921 | 910 | 903 | 891 | 857 |
| Zr | 929 | 923 | 914 | 907 | 893 | 860 |
| Hf | 929 | 919 | 913 | 905 | 891 | 854 |

Example 5:

Example 5 is characterized in that R consists entirely of Sm, Ti is selected as M, Bi is selected as A, and the proportion between Sm, Ti, T, and Bi is fixed at 1 : 1 : 10 : 1 so that Example 5 can be represented generally by

$$Sm_p\ Ti_p\ T_{10p}\ Bi_p$$

(where p = 100/13). Six test pieces were prepared differing only in the proportion of Co contained in T. Curie temperature was taken with respect to each test piece and the result is as shown in Table 7.

TABLE 7

| Co content (mol%) | 0 | 5 | 10 | 20 | 30 |
|---|---|---|---|---|---|
| Tc (℃) | 90 | 103 | 115 | 158 | 203 |

Similarly as in the case of Example 1, it is possible, according to Table 7, to increase Curie temperature by raising the proportion of Co in T; however, the Co content must be controlled such that the Curie temperature does not exceed 200 °C, since the output of a usual laser for writing is not large enough to heat a medium to temperatures above 200 °C. It is apparent from the results in Table 7 that to adjust the Co content in T to 30 % or somewhat less is an effective means when it is specially desired to optimize the Curie temperature of a medium.

Example 6:

Example 6 is characterized in that R consists entirely of Sm, M entirely of Ti, and T consists of Fe and Co in the proportion of 8 : 2, and the proportion between Sm, Ti, and T is fixed at 1 : 1 : 10 so that Example 6 can be represented generally by

$$Sm_p\ Ti_p\ T_{10p}\ A_{(100-12p)}\ .$$

Four groups of test pieces were prepared: the pieces belong to the first group contained Al as A, the second contained Bi as A, the third contained B as A, and the fourth contained Sb as A. Each group consisted of six pieces differing only in the content of the respective constituent A, i.e. Al, Bi, B or Sb, ranging from 0 to 10 mole percentages. Table 8 shows the Kerr rotation angle $\theta_K$ (° ) taken with respect to each test piece. It is seen from the results that through addition of 8 mole percentages or less

TABLE 8

| A content (mol%) | 0 | 3 | 6 | 8 |
|---|---|---|---|---|
| B | 0.47 | 0.51 | 0.52 | 0.49 |
| Al | 0.47 | 0.53 | 0.51 | 0.47 |
| Bi | 0.47 | 0.50 | 0.52 | 0.54 |
| Sb | 0.47 | 0.49 | 0.51 | 0.53 |

of Bi, Sb, Al, or B to an alloy of R-Ti-T series, it is possible to increase the Kerr rotation angle $\theta_K$ of the alloy.

In order to compare Samarium with Neodymium with respect to their effects on Kerr rotation angle, some test pieces were made which were composed of 9.2 mol % of Nd, 7.5 mol % of Ti, 1.1 mol % of Hf, and 82.2 mol % of Fe. The average of resulting Kerr rotation angle was 0.46 degrees, which is smaller than 0.47 degree in the case of the alloys containing Sm exclusively as rare earth.

Example 7:

Unlike the above examples, in which R consists exclusively of Sm, the present example pertains to seven test pieces wherein R consists of at least one element out of Gd, Tb, and Dy, and the pieces No. 3 and No. 4 include Pr. The other constituents in the test pieces are as shown in Table 9. Table 9 also shows the data of coercive force Hc and Kerr rotational angle $\theta_K$ , which indicate good corrosion resistance of the alloys.

Table 9

| No | Composition (mol %) | | | | | | | | Properties | |
|---|---|---|---|---|---|---|---|---|---|---|
| | Gd | Tb | Dy | Pr | Ti | Zr | Fe | Co | Hc, (kOe) | $\theta_K$ (° ) |
| 1 | – | 7.0 | 7.5 | – | 5.5 | 1.0 | 79.0 | – | 0.85 | 0.46 |
| 2 | 5.0 | 7.0 | – | – | 6.0 | 0.6 | 71.4 | 10 | 0.75 | 0.50 |
| 3 | 4.0 | 6.5 | – | 1.0 | 6.0 | 2.0 | 60.5 | 20 | 0.70 | 0.52 |
| 4 | 8.0 | – | – | 2.0 | 6.5 | 2.5 | 61.0 | 20 | 0.68 | 0.49 |
| 5 | 13.5 | – | – | – | 6.0 | – | 80.5 | – | 0.66 | 0.46 |
| 6 | – | 14.0 | – | – | 5.0 | 0.6 | 75.4 | 5 | 0.90 | 0.48 |
| 7 | – | – | 14.5 | – | 7.0 | 0.8 | 62.7 | 15 | 0.74 | 0.44 |

Table 10 below shows the results of another set of experiments where the compositions of the test pieces are as entered in the table. The purpose of these experiments was to examine the effectiveness of the additives B, Bi, and Sb. Although no direct inference can be made, one can suspect that the existence of Bi contributes clearly to improvement of the Kerr rotation angle $\theta_K$.

The results of the tests described so far indicate that the magneto-optical recording medium according to the invention is improved over the conventional media in the following items:

(a) relatively large Kerr rotation angle, and hence large S/N ratio;
(b) chemically inert, especially highly resistive to oxidation;
(c) relatively stable and high coercive force; and
(d) possibility of high density recording of information.

Table 10

| Tb | Nd | Ti | Zr | Fe | Co | B | Bi | Sb | Hc (kOe) | $\theta_K$ (° ) |
|---|---|---|---|---|---|---|---|---|---|---|
| (mol %) | | | | | | | | | | |
| 10 | 2.5 | 5.0 | 1.0 | 76.5 | 5 | – | – | – | 0.78 | 0.48 |
| 10 | 2.5 | 5.0 | 1.0 | 75.0 | 5 | 1.5 | – | – | 0.65 | 0.50 |
| 10 | 2.5 | 5.0 | 1.0 | 75.0 | 5 | – | 1.5 | – | 0.67 | 0.55 |
| 10 | 2.5 | 5.0 | 1.0 | 75.0 | 5 | – | – | 1.5 | 0.74 | 0.51 |
| 10 | 2.5 | 5.0 | 1.0 | 75.0 | 5 | – | 1.0 | 0.5 | 0.70 | 0.53 |

## Claims

1. A magneto-optical recording medium of amorphous alloy coated over a film substrate, said medium having its axis of easy magnetization in the direction of film thickness, wherein the composition of said medium is represented by the formula,

$$R_x\ M_y\ T_z\ A_n$$

in which R designates one or more rare earth elements including at least one element having atomic number 62 to 71 inclusive; M designates one or more elements selected from titanium, zirconium, and hafnium; T designates iron or a combination of iron and cobalt; and A designates at least one element selected from aluminum, boron, bismuth and antimony; and x, y, z, and n represent mole percentages that respectively fall in the following ranges: $4 \leqq x \leqq 15$; $4 < y \leqq 15$; $70 \leqq z \leqq 92$; and $0 \leqq n \leqq 10$.

2. A magneto-optical recording medium as claimed in claim 1, wherein said film thickness is between 1,500Å and 3,000Å.

3. A magneto-optical recording medium as claimed in claim 1, wherein said R consists exclusively of one or more rare earth elements having atomic numbers 62 to 71 inclusive.

4. A magneto-optical recording medium as claimed in claim 1, wherein said T consists of both iron and cobalt, the latter accounting for not greater than 30 wt% of T.

5. A magneto-optical recording medium as claimed in claim 1, wherein y is between 6 and 12 mole percentages.

6. A magneto-optical recording medium as claimed in claim 1, wherein n falls in the range $3 \leqq n \leqq 10$, and said A comprises at least bismuth or antimony.